# EUROPEAN PATENT APPLICATION

(11) **EP 1 422 841 A1**
(43) Date of publication of application: **26.05.2004**
(21) Application number: 02765564.6
(22) Date of filing: 17.09.2002
(51) Int. Cl.: H04B 10/12, H04Q 7/30

(54) **CONTROL STATION APPARATUS, BASE STATION APPARATUS, AND OPTICAL TRANSMISSION METHOD**

(30) Priority: 17.09.2001 JP 2001282321
(71) Applicant: MATSUSHITA ELECTRIC INDUSTRIAL CO., LTD., Kadoma-shi, Osaka 571-8501 (JP)
(72) Inventor: TANABE, Manabu, Kawasaki-shi, Kanagawa 213-0033 (JP); OGAWA, Akihito, Yokohama-shi, Kanagawa 226-0025 (JP); ISHIZUKA, Susumu, Yokohama-shi, Kanagawa 230-0075 (JP); SASAI, Hiroyuki, Katano-shi, Osaka 576-0017 (JP); TAKAKUSAKI, Keiji, Kanagawa 239-0847 (JP); MATSUBARA, Naoki, Suginami-ku, Tokyo 168-0063 (JP); MIZUTANI, Takanori, Yokohama-shi, Kanagawa 233-0002 (JP); SHIOBARA, Masafumi, Yokohama-shi, Kanagawa 223-0053 (JP); HATTORI, Tetsuya, Yokohama-shi, Kanagawa 223-0053 (JP)
(74) Representative: Grünecker, Kinkeldey, Stockmair & Schwanhäusser Anwaltssozietät
(86) International application number: PCT/JP2002/009486
(87) International publication number: WO 2003/034621

(57) **Abstract**

Frequency converting sections 104a to 104n convert the frequency of modulated transmission signals to signals of an intermediate frequency by multiplying the transmission signals by a local signal; filter sections 105a to 105n attenuate the transmission signals after frequency conversion in the frequency regions outside the frequency band of the desired signals; and E/O sections 106a to 106n convert the transmission signals from electric signals to optical signals and output them to the O/E sections 151a to 151n of the base station apparatus 150. O/E sections 151a to 151n convert the optical signals to electric signals; filter sections 152a to 152n attenuate the transmission signals after frequency conversion in the frequency regions outside the frequency band of the desired signals; frequency converting sections 154a to 154n convert the frequency of the transmission signals into the radio frequencies by multiplying the transmission signals by local signals, and output the transmission signals after frequency conversion respectively to the amplifying sections 155a to 155n.

## Description

### Technical Field

The present invention relates to a control station apparatus, a base station apparatus, and an optical transmission method.

### Background Art

In the prior art technique, when a wireless base station apparatus is located apart from an antenna, the wireless base station is connected to the antenna by a co-axial cable and the like. In this case, a power loss occurs when signals are transmitted through the co-axial cable. Particularly, there is a problem that, while the power loss becomes greater as the electric power of the signals increases, the electric power consumption at the wireless base station apparatus increases to obtain a signal output level in compensation of the power loss.

In this situation, by providing an optical fiber as a transmission line from a wireless base station apparatus to an antenna, a circuit for converting the transmission signals from electric signals to optical signals, a circuit for converting the transmission signals from optical signals to electric signals in the vicinity of the antenna, and furthermore a circuit for amplifying the electric signals in the vicinity of the antenna, it is possible to inhibit the power loss of the signals transmitted from the wireless base station apparatus to the antenna and the electric power consumption at the wireless base station apparatus.

However, in accordance with the prior art apparatus, after the optical transmission, when performing power amplification after conversion of optical signals into electric signals, there is a problem that the signals regions are amplified also in unnecessary frequency regions.

### Disclosure of Invention

It is an object of the present invention to provide a control station apparatus, a base station apparatus, and an optical transmission method in which the unnecessary wave components falling outside a desired frequency band of radio signals can be removed.

This object is accomplished by optically transmitting signals after converting the transmission signals into intermediate frequency signals and then into optical signals, and after converting the optical signals into electric signal, performing the process of removing signals other than the signals in a desired frequency band, followed by converting the signals into the signals of radio frequencies.

### Brief Description of Drawings

FIG. 1 is a block diagram showing the configuration of a control station apparatus and a base station apparatus in accordance with an embodiment 1 of the present invention;
FIG. 2 shows one example of the distribution in frequency of the electric power of transmission signals;
FIG. 3 shows one example of the attenuation characteristics of a filter for use in the radio frequency and the distribution in frequency of the electric power of transmission signals;
FIG. 4 shows one example of the attenuation characteristics of a filter and the distribution in frequency of the electric power of transmission signals;
FIG. 5 shows one example of the distribution in frequency of the electric power of transmission signals on a plurality of carriers;
FIG. 6 shows one example of the distribution in frequency of the electric power of transmission signals on a plurality of carriers;
FIG. 7 is a block diagram showing the configuration of a control station apparatus and a base station apparatus in accordance with an embodiment 2 of the present invention;
FIG. 8 shows one example of the distribution in frequency of the signals transmitted between the control station apparatus and the base station apparatus in accordance with the above embodiment;
FIG. 9 is a block diagram showing the configuration of a control station apparatus and a base station apparatus in accordance with an embodiment 3 of the present invention;
FIG. 10 is a block diagram showing the configuration of a control station apparatus and a base station apparatus in accordance with an embodiment 4 of the present invention; and
FIG. 11 is a block diagram showing the configuration of a control station apparatus and a base station apparatus in accordance with an embodiment 5 of the present invention.

### Best Mode for Carrying Out the Invention

The inventors of the present invention have found that signals to be optically transmitted can be converted into the signals of a frequency which is suitable for easily removing unnecessary wave components falling outside the desired frequencyband of the radio frequency, and then made the present invention.

That is, the gist of the present invention resides in that, while transmission signals are converted into optical signals for optical transmission after conversion into intermediate frequency signals, the transmission signals are converted into radio frequency signals after converting the optical signals into electric signals and then after performing the process of removing signals other than the signals in a desired frequency band.

In what follows, the embodiments of the present invention will be explained in detail with reference to the accompanying drawings.

### (Embodiment 1)

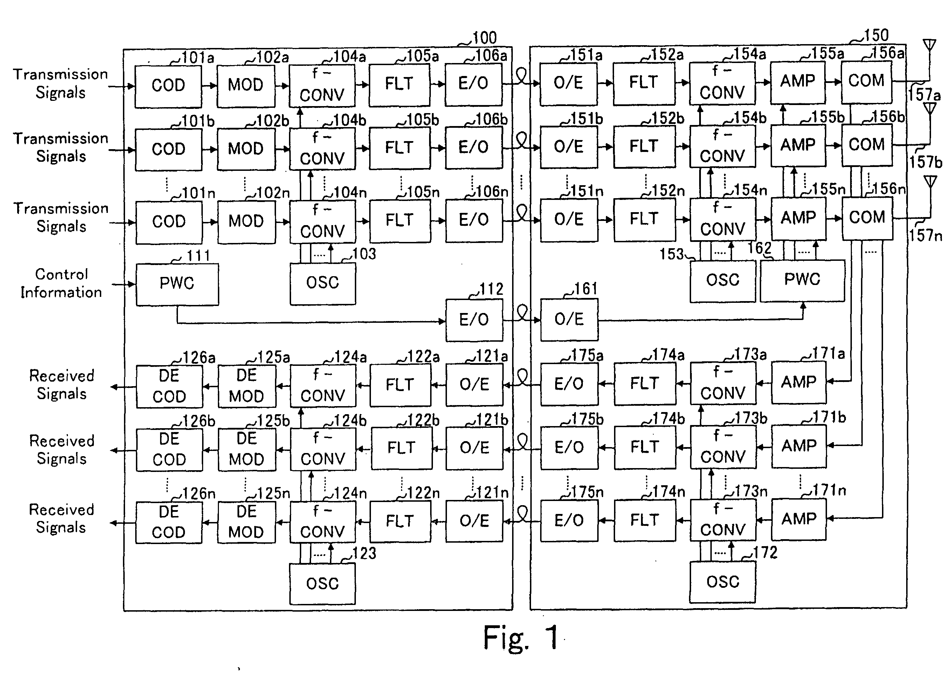

FIG. 1 is a block diagram showing the configuration of a control station apparatus and a base station apparatus in accordance with the embodiment 1 of the present invention. The control station apparatus 100 shown in FIG. 1 is composed of n encoding sections (COD) 101a to 101n, n modulator sections (MOD) 102a to 102n, a local oscillating section (OSC) 103, n frequency converting sections (f-CONV) 104a to 104n, n filter section (FLT) 105a to 105n, n E/O sections (E/O) 106a to 106n, a transmission power control section (PWC) 111, an E/O section (E/O) 112, n O/E sections (O/E) 121a to 121n, n filter sections (FLT) 122a to 122n, a local oscillating section (OSC) 123, n frequency converting sections (f-CONV) 124a to 124n, n demodulator sections (DEMOD) 125a to 125n, and n decoding sections (DECOD) 126a to 126n.

Also, the base station apparatus 150 is composed mainly of n O/E sections (O/E) 151a to 151n, n filter sections (FLT) 152a to 152n, a local oscillating section (OSC) 153, n frequency converting sections (f-CONV) 154a to 154n, n amplifying sections (AMP) 155a to 155n, n duplexers (COM) 156a to 156n,n antennas 157a to 157n, an O/E section (O/E) 161, a transmission power control section (PWC) 162, n amplifying sections (AMP) 171a to 171n, a local oscillating section (OSC) 172, n frequency converting sections (f-CONV) 173a to 173n, n filter sections (FLT) 174a to 174n and n E/O sections (E/O) 175a to 175n.

First, the transmission of transmission signals from the control station apparatus 100 to the base station apparatus 150 will be explained. In FIG. 1, the encoding sections 101a to 101n encode transmission signals and output them respectively to the modulator sections 102a to 102n. The modulator sections 102a to 102n modulate the encoded transmission signals and output them respectively to the frequency converting sections 104a to 104n.

The local oscillating section 103 generates local signals of an intermediate frequency, and outputs them to the frequency converting sections 104a to 104n. The frequency converting sections 104a to 104n convert the frequency of the transmission signals into the intermediate frequency by multiplying the modulated transmission signals by the local signals, and output the transmission signals after frequency conversion respectively to the filter sections 105a to 105n.

The filter sections 105a to 105n attenuate the transmission signals after frequency conversion in the frequency regions outside the frequency band of the desired signals and output them to the E/O sections 106a to 106n. The E/O sections 106a to 106n convert the transmission signals outputted from the filter sections 105a to 105n from electric signals to optical signals and output them to the O/E sections 151a to 151n of the base station apparatus 150.

The transmission power control section 111 outputs control information signals containing the information about the transmission power of the respective transmission signals to the E/O section 112. The E/O section 112 converts the control information signals from electric signals to optical signals and outputs them to the O/E section 161 of the base station apparatus 150.

The O/E sections 151a to 151n convert the optical signals outputted from the E/O sections 106a to 106n to electric signals, and output the transmission signals as obtained to the filter sections 152a to 152n. The filter sections 152a to 152n attenuate the transmission signals converted into electric signals in the frequency regions outside the frequency band of the desired signals and output them to the frequency converting sections 154a to 154n.

The local oscillating section 153 generates local signals of the differential frequency between each radio frequency and the intermediate frequency and outputs them to the frequency converting sections 154a to 154n. The frequency converting sections 154a to 154n convert the frequency of the transmission signals into the radio frequencies by multiplying the transmission signals outputted from the filter sections 152a to 152n by the local signals, and output the transmission signals after frequency conversion respectively to the amplifying sections 155a to 155n.

The amplifying sections 155a to 155n amplify the transmission signals converted into the radio frequency signals to the transmission power levels instructed by the transmission power control section 162 and outputs them to the duplexers 156a to 156n. The duplexers 156a to 156n output the transmission signals outputted from the amplifying sections 155a to 155n to the antennas 157a to 157n. The antennas 157a to 157n transmit the transmission signals outputted from the duplexers 156a to 156n as radio frequency signals.

The O/E section 161 converts the control information signals outputted from the E/O section 112 from electric signals to optical signals and outputs them to the transmission power control section 162. The transmission power control section 162 outputs the transmission power levels of the respective transmission signals in accordance with the control information signals to the amplifying sections 155a to 155n.

Next, the operation of the control station apparatus and the base station apparatus in accordance with the present embodiment will be explained. At first, the operation of transmitting transmission signals from the control station apparatus 100 to the base station apparatus 150 will be explained.

In the control station apparatus 100, the transmission signals are encoded by the encoding sections 101a to 101n, modulated by the modulator sections 102a to 102n, frequency converted into intermediate frequency signals by the frequency converting sections 104a to 104n, attenuated by the filter sections 105a to 105n in the frequency regions outside the frequency band of desired signals, converted from electric signals to optical signals at E/O sections 106a to 106n, and output them to the base station apparatus 150.

Then, in the base station apparatus 150, the transmission signals are converted from optical signals to electric signals by the O/E sections 151a to 151n. The transmission signals as converted into the electric signals include variety types of noise.

For example, the noise includes the noise generated by a light emitting device such as an LD (Laser Diode) and generated on the optical path, Schott noise generated by a light receiving device for receiving optical signals in the O/E sections 151a to 151n, the thermal noise generated by an amplifier (for example, preamplifier) when amplifying the electric signals subjected to conversion by the O/E sections 151a to 151n.

When the transmission signals inclusive of the above noise are converted into radio frequency signals for transmission, the generated radio frequency signals include signal components leaking into the frequency regions outside the desired frequency band.

For example, in accordance with 3GPP (3rd Generation Partnership Project) developing the standards of IMT-2000, it is stipulated that the standard bandwidth of transmission signals is 3.84 MHz, that the signal level of unnecessary waves centering around a center frequency 5 MHz apart from the center frequency of the transmission signals shouldbe 45dB lower than the transmission signals, and that the signal level of unnecessary waves centering around a center frequency 10 MHz apart from the center frequency of the transmission signals should be 50 dB lower than the transmission signals. However, transmission signals do sometime not comply with the standards because of the above noise and the like.

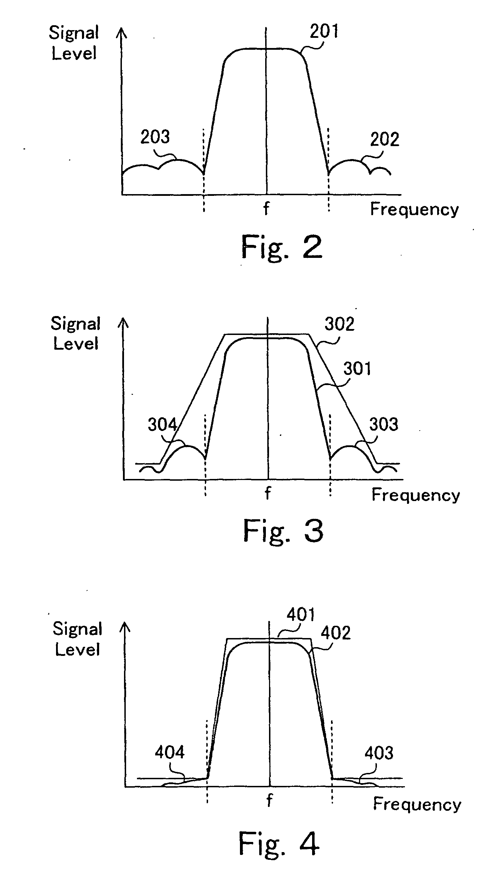

Because of this, transmission signals are converted into intermediate frequency signals, followed by removing unnecessary frequency components there from at the intermediate frequency. FIG. 2 shows one example of the distribution in frequency of the electric power of transmission signals. In FIG. 2, noise components 202 and 203 exist in regions apart from the center frequency "f" of the desired signals 201. The communication device sufficiently attenuates unnecessary frequency components by the use of a filter.

In this case, when making use of a filter capable of attenuating radio frequency signals in the frequency regions outside the frequency band of the desired signals, the filter is required to have the characteristics for attenuating signals in the frequency regions apart from the center frequency by a predetermined amount. FIG. 3 shows one example of the attenuation characteristics of a filter for use in the radio frequency band and the distribution in frequency of the electric power of transmission signals. In FIG. 3, the distribution 301 is the distribution in frequency of the electric power of the transmission signals as illustrated in FIG. 2 after removing noise components there from by the use of the filter having the attenuation characteristics 302.

As shown in FIG. 2, the attenuation characteristics 302 of the filter are insufficient in attenuation level in the frequency regions apart from the center frequency. The noise components 303 and 304 are illustrated as the distribution of the noise components, as attenuated by the filter, corresponding to the noise components 202 and 203 of FIG. 2,

Because of this, the frequency of transmission signals is temporarily converted into an intermediate frequency, and then a filter is applied to remove noise components from the transmission signals of the intermediate frequency. This intermediate frequency can be set no higher than the radio frequencies. On the other hand, the filter applicable in the intermediate frequency has a higher signal ratio of the frequency bandwidth of the pass-through region to the center frequency of the necessary signals than the filter applicable in the radio frequencies so that it is possible to sufficiently remove unnecessary waves. FIG. 4 shows one example of the attenuation characteristics of a filter and the distribution in frequency of the electric power of transmission signals. The filter as shown in FIG. 4 is a filter applicable in the intermediate frequency. As illustrated in FIG. 4, the attenuation characteristics 401 of the filter has a sharp attenuation curve in regions a predetermined frequency apart from the intermediate frequency "f". Accordingly, it is possible to sufficiently attenuate the noise components 403 and 404 without attenuating the signals 402.

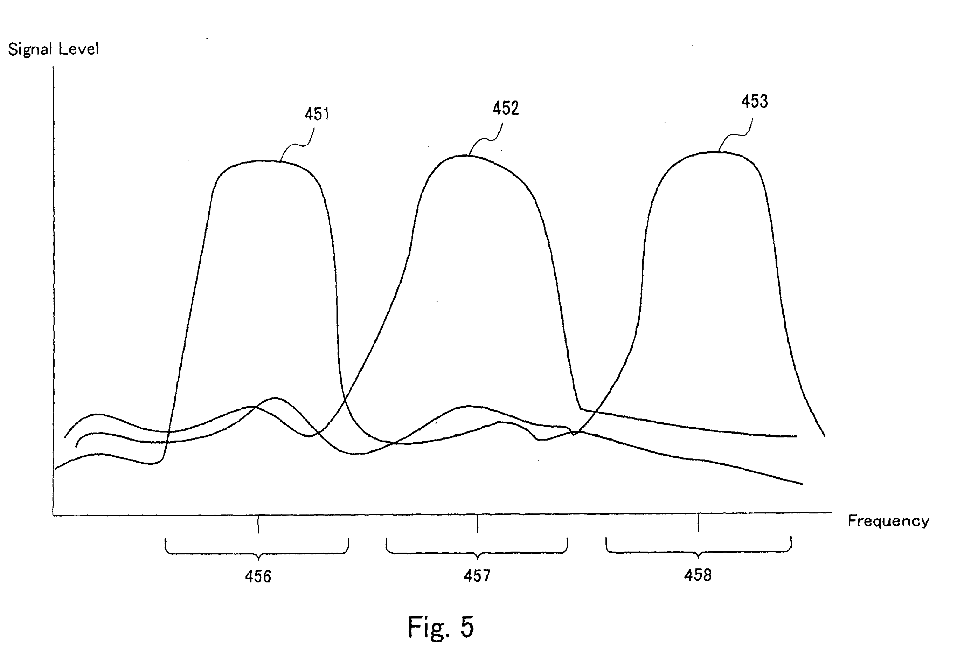

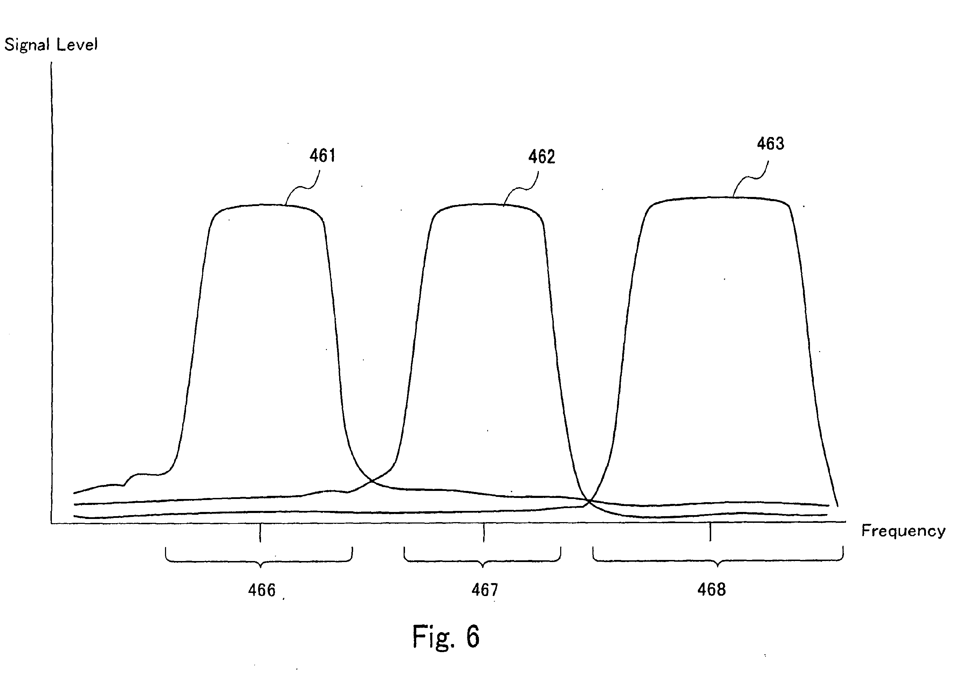

As described above, by the use of a filter capable of attenuating signals in the frequency regions outside the frequency band of the desired signals, it is possible to attenuate unnecessary waves inclusive of other carriers of own apparatus. FIGS. 5 and 6 show examples of the distribution in frequency of the electric power of transmission signals on a plurality of carriers. FIG. 5 shows the example in which the transmission signals after passing through the filter having the characteristics as illustrated in FIG. 3 are assigned to a plurality of radio frequency carriers. The signals 451, 452 and 453 include high level signals in frequency regions outside the respective frequency bands 456, 457 and 458, and therefore influence each other as noise to degrade the ratio of signal to noise.

FIG. 6 shows the example in which the transmission signals after passing through the filter having the characteristics as illustrated in FIG. 4 are assigned to a plurality of radio frequency carriers. The signals 461, 462 and 463 include low level signals in frequency regions outside the respective frequency bands 466, 467 and 468, and therefore less influence on each other as noise to improve the ratio of signal to noise.

The control station apparatus 100 and the base station apparatus 150 make therefore use of a filter capable of attenuating unnecessary waves inclusive of other carriers of own apparatus.

As described above, the transmission signals are converted into radio frequency signals by the frequency converting sections 154a to 154n after removing noise components by the filter sections 152a to 152n. The signal levels (for example, the transmission power levels) are amplified by the amplifying sections 155a to 155n.

On the other hand, the optical transmission is characterized by a narrower dynamic range than the transmission of electric signals. In the case of the optical transmission, the maximum level of the dynamic range is low so that the signal level is saturated to make it difficult to sufficiently represent strong and weak electric signals. However, if the maximum level of the dynamic range is raised to match the maximum level of the signal level, faint signals may be buried in noise.

For this reason, the transmission power control section 111 of the control station apparatus 100 outputs the information about the transmission powers of the respective transmission signals to the transmission power control section 162 of the base station apparatus 150 in order to inform the amplifying sections 155a to 155n of the transmission power levels for amplification. Then, when the transmission signals after converting from optical signals to electric signals are amplified in the base station apparatus 150, it is possible to compensate the narrow dynamic range of the optical transmission by determining the amplification level in accordance with the transmission power level outputted from the transmission power control section 162. The transmission signals are then transmitted through the antennas 157a to 157n as radio signals.

As described above, in accordance with the control station apparatus and the base station apparatus of the present embodiment, in the control station apparatus, after the frequency of transmission signals is converted to an intermediate frequency, the transmission signals are electro-opto converted and transmitted to the base station apparatus, while, after opto-electro converting the transmission signals and attenuating, unnecessary signals by the use of a filter in the frequency regions outside the frequency band of the desired signals, the transmission signals are frequency converted to radio frequency signals, and therefore a filter capable of satisfactorily removing noise can be used to remove unnecessary wave components falling outside the desired frequency band of the radio signals.

Next, the operation of transmitting received signals from the base station apparatus 150 to the control station apparatus 100 will be explained.

In FIG. 1, radio signals are received by the antennas 157a to 157n and output to the duplexers 156a to 156n as received signals. The duplexers 156a to 156n output the received signals outputted from the antennas 157a to 157n to the amplifying sections 171a to 171n. The amplifying sections 171a to 171n amplify the received signals outputted from the duplexers 156a to 156n and output them to the frequency converting sections 173a to 173n.

The local oscillating section 172 generates local signals of the differential frequency between each radio frequency and the intermediate frequency and outputs them to the frequency converting sections 173a to 173n. The frequency converting sections 173a to 173n convert the frequencies of the received signals into the intermediate frequency by multiplying the received signals outputted from the amplifying sections 171a to 171n by the local signals, and output the received signals after frequency conversion respectively to the filter sections 174a to 174n.

The filter sections 174a to 174n attenuate the received signals after frequency conversion in the frequency regions outside the frequency band of the desired signals, and output them to the E/O sections 175a to 175n. The E/O sections 175a to 175n convert the transmission signal, outputted from the filter sections 174a to 174n, from electric signals to optical signals and output them to the O/E sections 121a to 121n of the control station apparatus 100.

The O/E sections 121a to 121n convert the optical signals outputted from the E/O sections 175a to 175n into electric signals and output the transmission signals as obtained to the filter sections 122a to 122n. The filter sections 122a to 122n attenuate the transmission signals after conversion into electric signals in the frequency regions outside the frequency band of the desired signals and output them to the frequency converting sections 124a to 124n.

The local oscillating section 123 generates a local signal of the intermediate frequency and outputs it to the frequency converting sections 124a to 124n. The frequency converting sections 124a to 124n multiply the received signals outputted from the filter sections 122a to 122n by the local signals, and convert the frequency of the received signals into the frequency at which the demodulator sections 125a to 125n can perform an demodulating operation and then output them to the demodulator sections 125a to 125n.

The demodulator sections 125a to 125n demodulate the received signals outputted from the frequency converting sections 124a to 124n and output them to the decoding sections 126a to 126n. The decoding sections 126a to 126n decode the received signals outputted from the demodulator section 125a to 125n.

When received signals are transmitted from the base station apparatus 150 to the control station apparatus 100, the filter sections 122a to 122n can make use of a filter of the intermediate frequency. In the same manner as the transmission of transmission signals from the control station apparatus 100 to the base station apparatus 150, with respect to the transmission signals from which noise components are removed by the filter of the intermediate frequency, it is possible to increase the ratio of the frequency bandwidth of the pass-through region to the center frequency of the necessary signals than the filter applicable in the radio frequencies so that it is possible to sufficiently remove unnecessary waves.

As described above, in accordance with the control station apparatus and the base station apparatus of the present embodiment, after the frequencies of the received signals of the radio frequencies are converted to an intermediate frequency, the received signals are electro-opto converted and transmitted to the control station apparatus in the base station apparatus, while, after opto-electro converting the received signals and attenuating unnecessary signals by the use of a filter in the frequency regions outside the frequency band of the desired signals, the received signals are frequency converted to baseband signals in the control station apparatus, and therefore a filter capable of satisfactorily removing noise can be used to remove unnecessary wave components falling outside the desired frequency band of the radio signals.

### (Embodiment 2)

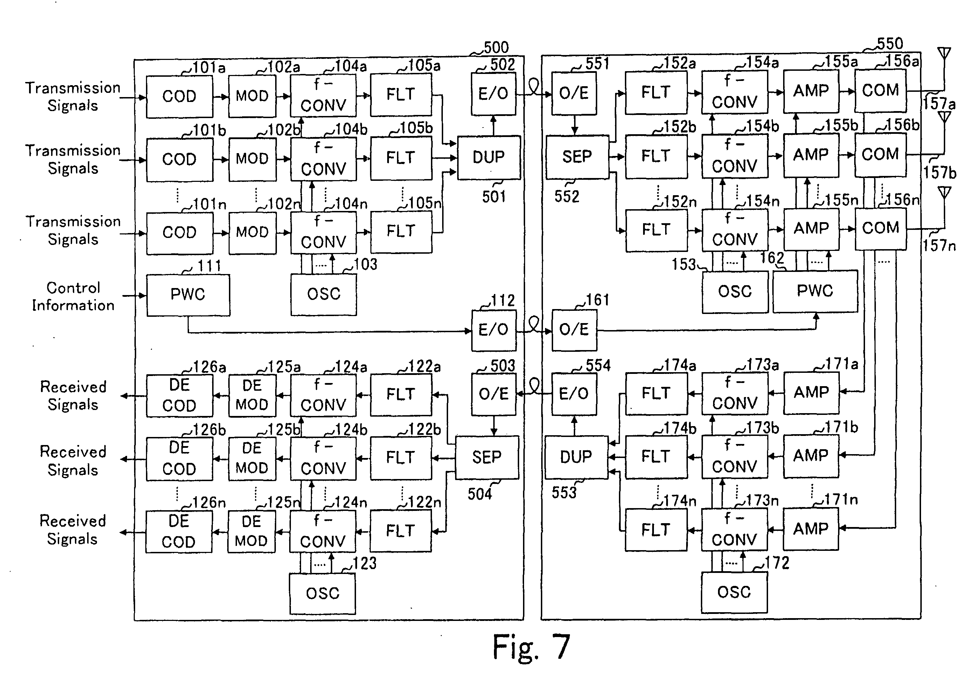

FIG. 7 is a block diagram showing the configuration of a control station apparatus and a base station apparatus in accordance with the embodiment 2 of the present invention. However, like reference numbers indicate elements having similar structures as illustrated in FIG. 1, and detailed explanation is omitted.

The control station apparatus 500 as shown in FIG. 7 is provided with a multiplexer section (DUP) 501, an E/O section (E/O) 502, an O/E section (O/E) 503 and a separator section (SEP) 504, and distinguished from the control station apparatus as shown in FIG. 1 in that the transmission signals converted into intermediate frequency signals are multiplexed by frequency division, then electro-opto converted and transmitted to the base station apparatus 550 and that, after opto-electro converting the optical signals as transmitted from the base station apparatus 550, the signals multiplexed by frequency division are demultiplexed by the use of the intermediate frequencies.

Also, the base station apparatus as shown in FIG. 7 is provided with an O/E section (O/E) 551, a separator section (SEP) 552, a multiplexer section (DUP) 553 and an E/O section (E/O) 554, and distinguished from the base station apparatus as shown in FIG. 1 in that after opto-electro converting the optical signals as transmitted from the control station apparatus 500, the signals multiplexed by frequency division are demultiplexed to intermediate frequency signals, and that the received signals converted into intermediate frequency signals are multiplexed by frequency division, then electro-opto converted and transmitted to the control station apparatus 500.

The filter sections 105a to 105n attenuate the transmission signals as converted in the frequency regions outside the frequency band of the desired signals and output them to the multiplexer section 501.

The multiplexer section 501 multiplexes the intermediate frequency transmission signals outputted from the filter sections 105a to 105nby frequency division, and outputs them to the E/O section 502. The E/O section 502 converts the transmission signals outputted from the multiplexer section 501 from electric signals to optical signals and outputs them to the O/E section 551 of the base station apparatus 550.

The O/E section 551 converts the optical signals outputted from the E/O section 502 into electric signals, and outputs the transmission signals as obtained to the separator section 552. The separator section 552 extracts and separates the transmission signals as converted into the electric signals in the units of predetermined frequency regions, and outputs the transmission signals as extracted to the filter sections 152a to 152n.

The filter sections 152a to 152n attenuate the transmission signals separated by frequency region by the separator section 552 in the frequency regions outside the frequency band of the desired signals and output them to the frequency converting sections 154a to 154n.

As described above, in accordance with the control station apparatus and the base station apparatus of the present embodiment, after converting the frequency of transmission signals to intermediate frequencies and attenuating unnecessary signals by the use of a filter in the frequency regions outside the frequency band of the desired signals, the transmission signals converted into the intermediate frequency signals are multiplexed by frequency region, electro-opto converted and transmitted to the base station apparatus in the control station apparatus, while the optical signals are converted into electric signals, then separated by frequency region, and frequency converted into radio frequency signals, and therefore it is possible to decrease the number of optical fibers required for optical transmission.

Next, the operation of transmitting received signals from the base station apparatus 550 to the control station apparatus 500 will be explained.

In FIG. 7, the filter sections 174a to 174n attenuate the received signals after frequency conversion in the frequency regions outside the frequency band of the desired signals, and output them to the multiplexer section 553. The multiplexer section 553 multiplexes the received signals of the intermediate frequencies outputted from the filter sections 174a to 174n by frequency division, and outputs them to the E/O section 554. The E/O section 554 converts the received signals outputted from the multiplexer section 553 from electric signals to optical signals, and outputs them to the O/E section 503 of the control station apparatus 500.

The O/E section 503 converts the optical signals outputted from the E/O section 554, and outputs the received signals as obtained to the separator section 504. The separator section 504 separates and extracts signals from the received signals as converted into the electric signals in the units of predetermined frequency regions, and outputs the transmission signals as extracted to the filter sections 122a to 122n.

The filter sections 122a to 122n attenuate the transmission signals as converted into electric signals in the frequency regions outside the frequency band of the desired signals and output them to the frequency converting sections 124a to 124n.

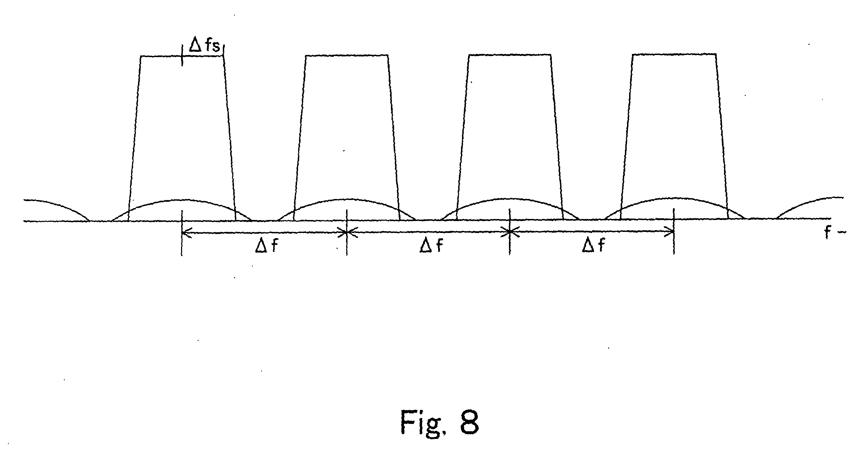

Next, the setting of the intermediate frequencies will be explained. FIG. 8 shows one example of the distribution in frequency of the signals transmitted between the control station apparatus and the base station apparatus in accordance with the present embodiment. In FIG. 8, while the ordinate indicates the signal level, the abscissa indicates the frequency.

The local oscillating section 103 outputs local signals of different frequencies respectively to the frequency converting sections 104a to 104n. The frequency converting sections 104a to 104n convert the transmission signals to signals of intermediate frequencies which are different from each other by multiplying the transmission signals by the local signals outputted from the local oscillating section 103. In this case, each of the intermediate frequencies of the transmission signals are set to be an integer multiple of the frequency of a referential signal. For example, if the frequency of the referential signal is Δfs, the frequencies of the transmission signals are set to be apart from each other by Δf which is an integer multiple of Δfs.

It is possible to reduce the influence of third order distortion and CTB signals upon other signals by multiplexing the signals converted of the intermediate frequencies as described in the above explanation.

As described above, in accordance with the base station apparatus and the control station apparatus of the present embodiment, after converting the frequency of received signals to intermediate frequencies and attenuating unnecessary signals by the use of a filter in the frequency regions outside the frequency band of the desired signals, the received signals converted into the intermediate frequency signals are multiplexed by frequency region, electro-opto converted and transmitted to the control station apparatus in the base station apparatus, while the optical signals are converted into electric signals, then separated by frequency region, and frequency converted into radio frequency signals, and therefore it is possible to decrease the number of optical fibers required for optical transmission.

### (Embodiment 3)

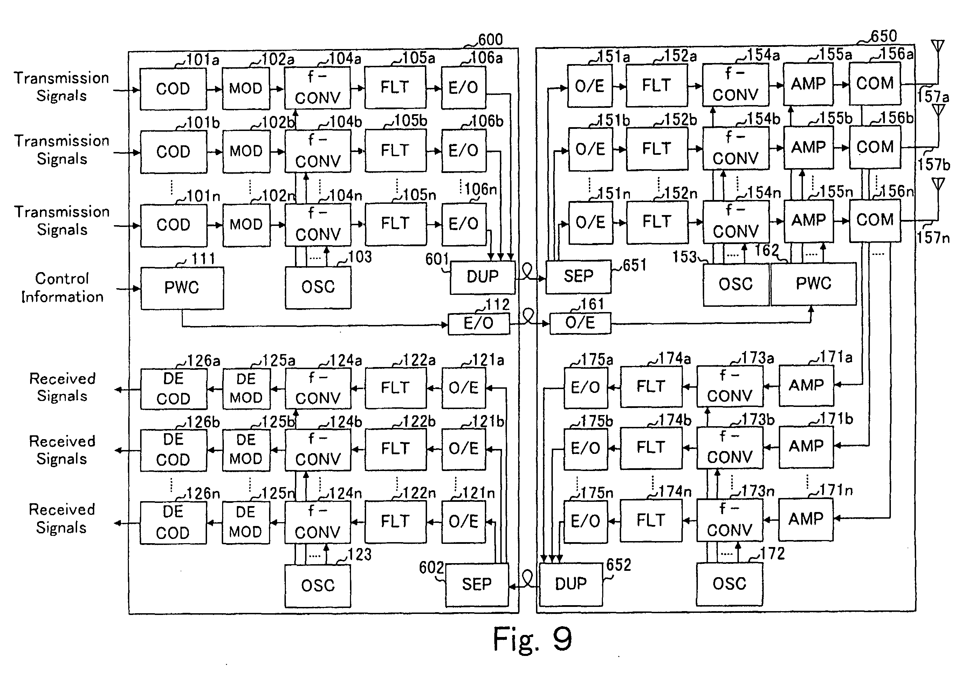

FIG. 9 is a block diagram showing the configuration of a control station apparatus and a base station apparatus in accordance with the embodiment 3 of the present invention. However, like reference numbers indicate elements having similar structures as illustrated in FIG. 1, and detailed explanation is omitted.

The control station apparatus 600 as shown in FIG. 9 is provided with a multiplexer section (DUP) 601 and a separator section (SEP) 602, and distinguished from the control station apparatus as shown in FIG. 1 in that the transmission signals converted into intermediate frequency signals are electro-opto converted, multiplexed by wavelength division, and then transmitted to the base station apparatus 650 and that, after separating the optical signals by wavelength division, the optical signals are opto-electro converted.

Also, the base station apparatus as shown in FIG. 9 is provided with a separator section (SEP) 651, a multiplexer section (DUP) 652, and distinguished from the base station apparatus as shown in FIG. 1 in that the optical signals as transmitted from the control station apparatus 600 are separated by wavelength division , followed by electro-opto conversion, and that the received signals converted into intermediate frequency signals are multiplexed by wavelength division and transmitted to the control station apparatus 600.

The E/O sections 106a to 106n convert the transmission signals outputted from the filter sections 105a to 105n from electric signals to optical signals and output them to the multiplexer section 601. The multiplexer section 601 performs wavelength multiplexing on the transmission signals converted into the optical signals to the separator section 651 of the base station apparatus 650.

The separator section 651 separates the transmission signals outputted from the multiplexer section 601 in the units of the wavelengths which are used in the control station apparatus 600 in advance of the multiplexing, and the transmission signals as separated are output to the O/E sections 151a to 151n respectively. The O/E sections 151a to 151n convert the optical signals outputted from the separator section 651 into electric signals, and outputs the transmission signals as obtained to the filter sections 152a to 152n.

Similarly, in the base station apparatus 650, the received signals converted into intermediate frequency signals are electro-opto converted, then multiple-wavelength multiplexed and out put to the control station apparatus 600.

The E/O sections 175a to 175n convert the transmission signals outputted from the filter sections 174a to 174n from electric signals to optical signals and output them to the multiplexer section 652. The multiplexer section 652 performs wavelength multiplexing on the transmission signals as converted into the optical signals, and outputs them to the separator section 602 of the control station apparatus 600.

In the control station apparatus 600, the separator section 602 separates the received signals outputted from the multiplexer section 652 in the units of the wavelengths which are used in the base station apparatus 650 in advance of the multiplexing, and the received signals as separated are output to the O/E sections 121a to 121n. The O/E sections 121a to 121n convert the optical signals outputted from the separator section 602 into electric signals, and output the transmission signals as obtained to the filter sections 122a to 122n.

As described above, in accordance with the control station apparatus and the base station apparatus of the present embodiment, the control station apparatus converts transmission signals to intermediate frequency signals, performs wavelength multiplexing on a plurality of the transmission signals as electro-opto converted, and outputs them to the base station apparatus, while the optical signals are separated in the base station apparatus in wavelength division, opto-electro converted and frequency converted into radio frequency signals, and therefore it is possible to decrease the number of optical fibers required for optical transmission.

### (Embodiment 4)

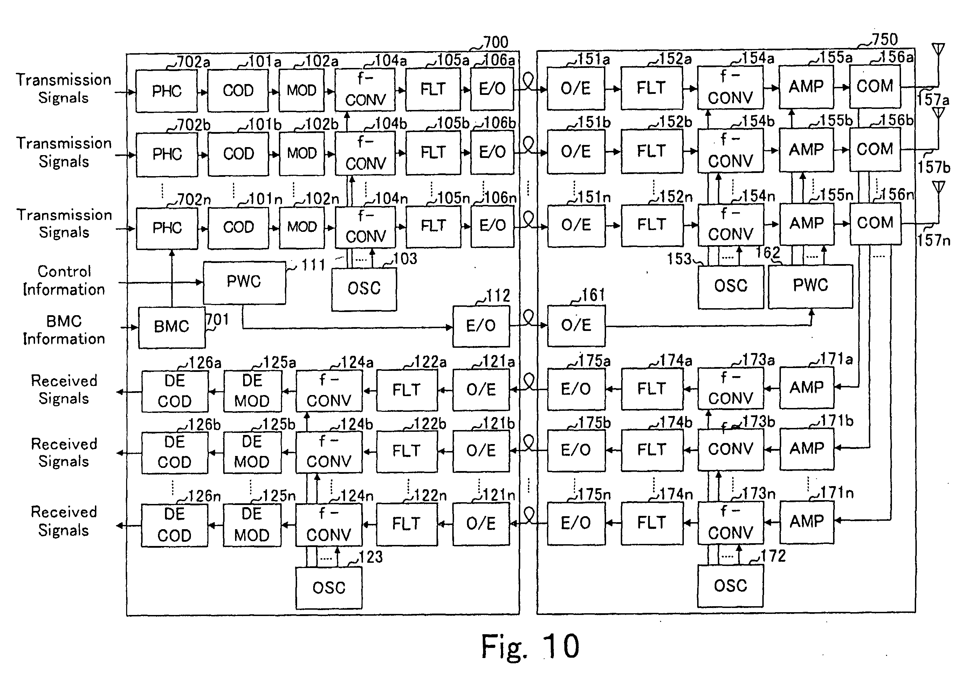

FIG. 10 is a block diagram showing the configuration of a control station apparatus and a base station apparatus in accordance with the embodiment 4 of the present invention. However, like reference numbers indicate elements having similar structures as illustrated in FIG. 1, and detailed explanation is omitted.

The control station apparatus 700 as shown in FIG. 10 is provided with a directivity control section (BMC) 701 and phase control sections (PHC) 702a to 702n, and distinguished from the base station apparatus as shown in FIG. 1 in that a single signal is transmitted with different phases from a plurality of antennas to form a directivity on a transmision signal.

The directivity control section 701 receives the information indicative of directivity and indicates the phases of the signals to be transmitted through the antennas 157a to 157n to the phase control sections 702a to 702n.

The phase control sections 702a to 702n output the transmission signals with differential phases to the encoding sections 101a to 101n in accordance with the instruction from the directivity control section 701. For example, the phase control sections 702a to 702n create the differential phases by delaying the transmission signals.

The transmission signals are transmitted from the antennas 157a to 157n after passing through the encoding sections 101a to 101n, the modulator sections 102a to 102n, the frequency converting sections 104a to 104n, the filter sections 105a to 105n, the E/O sections 106a to 106n, the O/E sections 151a to 151n, the filter sections 152a to 152n, the frequency converting sections 154a to 154n, the amplifying sections 155a to 155n and the duplexers 156a to 156n.

As described above, in accordance with the control station apparatus and the base station apparatus of the present embodiment, it is possible to transmit signals with directivity by forming differential phases among the transmission signals for transmission from a plurality of antennas in the control station apparatus.

While the respective transmission signals are transmitted from the control station apparatus to the base station apparatus by different optical fibers in accordance with the present embodiment, it is also possible to multiplex the signals for transmission in the same manner as in the embodiment 2 or the embodiment 3.

In this case, it is possible to decrease the number of optical fibers required for optical transmission between the control station apparatus and the base station apparatus in accordance with the present embodiment, and inhibit the phase differences (skew) caused by differential propagation paths by making transmission of transmission signals with the same optical fiber.

Also, the location of the phase control sections for creating differential phases is not particularly limited as long as the differential phases are given to the transmission signals. The phase control sections for creating differential phases can be located in the base station apparatus. Also, the differential phases can be introduced during the propagation of optical signals. In this case, the differential phases can be introduced by optical fibers having different lengths for the respective transmission lines.

### (Embodiment 5)

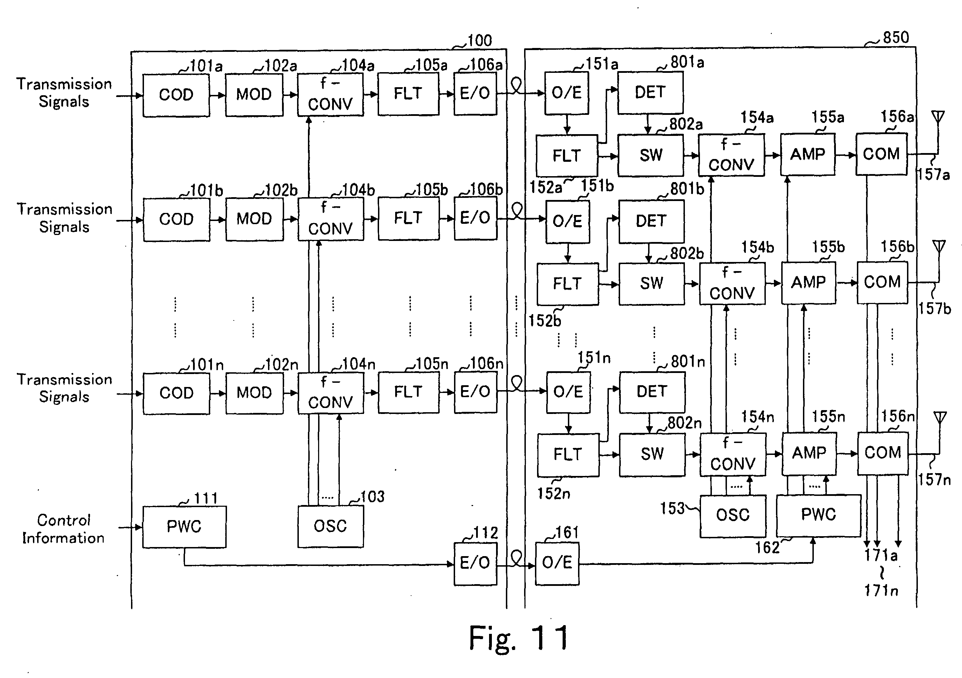

FIG. 11 is a block diagram showing the configuration of a control station apparatus and abase station apparatus in accordance with the embodiment 5 of the present invention. However, like reference numbers indicate elements having similar structures as illustrated in FIG. 1, and detailed explanation is omitted.

In the case where transmission signals of a plurality of intermediate frequencies are transmitted by the same optical transmission line, unnecessary wave components are removed for the respective intermediate frequencies and multiplexed for transmission. If the number of the carriers being currently used for optical transmission is smaller than the maximum number of carriers, the filter corresponding to a transmission line carrying no signal might generate unnecessary wave components of noise and distortion.

For example, in the case of W-CDMA at the present time, while the service is sometimes provided only with two carriers among the four carriers available in the band from the view point of the traffic amount as required, there is the possibility of generating unnecessary wave components of noise and distortion from the filter, corresponding to a carrier which is not used for signal transmission, not to comply with the requirements such as Radio Law and the like.

The base station apparatus 850 as illustrated in FIG. 11 is composed of signal detecting sections (DET) 801a to 801n and signal blocking sections (SW) 802a to 802n, and distinguished from the base station apparatus as shown in FIG. 1 in that unnecessary wave components of noise and distortion are inhibited from being generated by blocking the output of the filter corresponding to a transmission line carrying no signal.

In FIG. 11, the filter sections 152a to 152n attenuate the transmission signals as converted into electric signals in the frequency regions outside the frequency band of the desired signals and output them to the signal detecting sections 801a to 801n and the signal blocking sections 802a to 802n. The signal detecting sections 801a to 801n determines whether or not transmission signals are output from the filter sections 152a to 152n, and outputs the signal detection result to the signal blocking sections 802a to 802n.

When signals are detected based on the result outputted from the signal detecting sections 801a to 801n, the signal blocking sections 802a to 802n output the transmission signals outputted from the filter sections 152a to 152n to the frequency converting sections 154a to 154n. Conversely, when signals are not detected based on the result outputted from the signal detecting sections 801a to 801n, the signal blocking sections 802a to 802n does not output the transmission signals outputted from the filter sections 152a to 152n to the frequency converting sections 154a to 154n.

The frequency converting sections 154a to 154n convert the frequency of the transmission signals to the radio frequencies by multiplying the transmission signals outputted from the filter sections 152a to 152n by the local signals, and output the transmission signals after frequency conversion to the amplifying sections 155a to 155n respectively.

As described above, in accordance with the base station apparatus of the present embodiment, it is possible to prevent unnecessary wave components falling outside the desired frequency band of the radio frequency signals from increasing by blocking the output of the filter corresponding to a transmission line carrying no signal and inhibiting the increase in the output of unnecessary wave components of noise and distortion.

Incidentally, while unnecessary wave components are removed by the filter immediately in advance of converting transmission signals into radio frequency signals in the case of the signal transmission apparatus according to the present invention, the location of the filter is not limited thereto as long as the intermediate frequency signals are processed to remove signals other than the signals in a desired frequency band by the use of the filter.

Also, while the output of radio frequency signals is not particularly limited to the configuration in which the respective transmission signals are output through separate antennas, it is possible to multiplex transmission signals of a plurality of radio frequencies and output them through a single antenna. For example, the multiplexing of transmission signals may be done in radio frequencies or in intermediate frequencies, then followed by conversion to radio frequency signals.

Also, in the intermediate frequency conversion process, it is possible to reduce the influence of multiple echo distortion and noise of local signals by selecting the frequency of the local signals higher than the intermediate frequency and combining transmission signals with the local signal.

As apparent from the above explanation, in accordance with the control station apparatus and the base station apparatus of the present invention, after the frequency of transmission signals is converted to an intermediate frequency, the transmission signals are electro-opto converted and optically transmitted, while, after opto-electro converting the optical signals and attenuating unnecessary signals by the use of a filter in the frequency regions outside the frequency band of the desired signals, the transmission signals are frequency converted to radio frequency signals, and therefore it is possible to remove unnecessary wave components falling outside the desired frequency band of the radio frequency signals.

The present specification is based on the Japanese Patent Application No. 2001-282321 filed on September 17, 2001, entire content of which is incorporated herein by reference.

### Industrial Applicability

The present invention is suitable for use in the base station apparatus and the control station apparatus based on the CDMA communication method.

## Claims

1. A base station apparatus that receives transmission signals on a plurality of carriers transmitted as optical signals from a control station apparatus and transmits the transmission signals as electric signals, comprising: an optoelectronic conversion section that converts the transmission signals from optical signals into intermediate frequency electric signals; a filter section that attenuates unnecessary waves inclusive of other carriers of own apparatus; and a radio frequency conversion section that converts the frequency of the transmission signals, from which signals other than desired signals are removed in the filter section, into radio frequencies which are frequencies higher than the intermediate frequency for each carrier.

2. The base station apparatus according to claim 1, further comprising an amplifying section that amplifies the transmission signals converted into radio frequency, in accordance with the transmission power levels output from said control station apparatus.

3. The base station apparatus according to claim 1, further comprising a signal detecting section that determines whether or not the transmission signals are output from said filter section; and a signal blocking section that blocks the output of the transmission signals from said filter section.

4. The base station apparatus according to claim 1, further comprising a frequency separating section that separates the transmission signals converted into electric signals in predetermined frequency units, and wherein said filter section removes unnecessary waves inclusive of a carrier other than the carrier of own apparatus from a plurality of the transmission signals separated by said frequency separating section.

5. The base station apparatus according to claim 1, further comprising a wavelength separating section that separates the transmission signals which are received as optical signals in predetermined wavelength units, and wherein said optoelectronic conversion section converts a plurality of the transmission signals separated by said wavelength separating section from optical signals to electric signals respectively.

6. A control station apparatus that transmits transmission signals to a base station apparatus as optical signals, and comprises an intermediate frequency conversion section that converts the frequency of said transmission signals to an intermediate frequency; and an electrooptical conversion section that converts the transmission signals, converted into signals of said intermediate frequency, from electric signals to optical signals.

7. The control station apparatus according to claim 6, further comprising a filter section that attenuates components falling outside a desired frequency band and wherein the electrooptical conversion section converts the transmission signals, from which signals other than desired signals are removed, from electric signals to optical signals.

8. The control station apparatus according to claim 6, further comprising a transmission power level output section that outputs, to the base station apparatus, a transmission power level indicative of the electric power level of the transmission signals to be wireless transmitted from the base station.

9. The control station apparatus according to claim 6, further comprising a frequency multiplexing section that multiplexes by frequency a plurality of transmission signals, wherein the intermediate frequency conversion section converts a plurality of transmission signals into signals of different intermediate frequencies, and wherein said frequency multiplexing section frequency multiplexes a plurality of transmission signals converted into intermediate frequency signals by said intermediate frequency conversion section.

10. The control station apparatus according to claim 6, further comprising a wavelength multiplexing section that multiplexes by wavelength a plurality of transmission signals converted into optical signals at the electro-optical conversion section.

11. The control station apparatus according to claim 9 wherein the intermediate frequency conversion section converts the plurality of transmission signals into intermediate frequency signals of different integer multiples of the reference frequency.

12. The control station apparatus according to claim 6 further comprising a phase control section that introduces a plurality of phase differences among the transmission signals; and a plurality of antennas that transmits said plurality of transmission signals respectively.

13. A base station apparatus that transmits received signals on a plurality of carriers as optical signals to a control station apparatus, comprising: an intermediate frequency conversion section that converts the frequencies of the received signals from radio frequencies to an intermediate frequency; a filter section that attenuates unnecessary waves inclusive of other carrier of own apparatus out of received signals converted into intermediate frequency; and an electro optical conversion section that converts the received signal, from which signals other than desired signals are removed, from electric signals to optical signals.

14. The base station apparatus according to claim 13, further comprising a frequency multiplexing section that multiplexes by frequency a plurality of the received signals converted into the intermediate frequency at the intermediate frequency conversion section.

15. The base station apparatus according to claim 13, further comprising a wavelength multiplexing section that multiplexes by wavelength a plurality of received signals converted into optical signals at the electrooptical conversion section.

16. The base station apparatus according to claim 15, wherein the intermediate frequency conversion section converts the plurality of received signals into intermediate frequency signals of integer multiples of the reference frequency different from each other.

17. A control station apparatus that receives received signals as transmitted from a base station apparatus as optical signals, comprising: an optoelectronic conversion section that converts the optical signals into electric signals; a baseband conversion section that frequency converts said intermediate frequency signals into baseband signals, wherein said base station apparatus comprises: an intermediate frequency conversion section that converts the frequencies of the received signals on a plurality of carriers from the radio frequencies to an intermediate frequency; a filter section that attenuates unnecessary waves inclusive of a carrier other than the carrier of own apparatus from the received signals as converted into the intermediate frequency; and an electrooptical conversion section that converts the reception signals, whose unnecessary waves are attenuated, from electric signals to optical signals.

18. The control station apparatus according to claim 17, further comprising a filter section that attenuates components falling outside a desired frequency band from said intermediate frequency signals and wherein the baseband conversion section converts the intermediate frequency signals, from which signals other than desired signals are removed, to optical signals.

19. The control station apparatus according to claim 17, further comprising a frequency separating section that separates the received signals as converted by the optoelectronic conversion section into electric signals in predetermined frequency units, and wherein said filter section removes signals other than desired signals from a plurality of the received signals as separated by said frequency separating section.

20. The control station apparatus according to claim 17, further comprising a wavelength separating section that separates the received signals, which are received as optical signals, in predetermined wavelength units, and wherein the optoelectronic conversion section converts a plurality of the received signals as separated by said wavelength separating section from optical signals to electric signals.

21. An optical transmission method of converting the frequency of transmission signals to an intermediate frequency, converting the transmission signals as converted into said intermediate frequency signals from electric signals to optical signals, and outputting the optical signals to a base station apparatus in a control station apparatus; and converting the transmission signals outputted from a control station apparatus from optical signals to electric signals, and converting the transmission signals into radio frequency signals after attenuating unnecessary waves inclusive of a carrier other than the carrier of own apparatus which are contained in the transmission signals as converted into the electric signals in the base station apparatus.

22. An optical transmission method of converting the frequency of received signals from radio frequencies to intermediate frequency signals, converting the received signals as converted into said intermediate frequency signals from electric signals to optical signals, and outputting the optical signals to a control station apparatus in a base station apparatus; and converting the received signals outputted from a base station apparatus from optical signals to electric signals, and converting the received signals into baseband signals after attenuating unnecessary waves inclusive of a carrier other than the carrier of own apparatus which are contained in the received signals as converted into the electric signals.

## Amended claims

### Amended claims under Art. 19.1 PCT

**1.** (Amended) A base station apparatus that receives transmission signals on a plurality of carriers transmitted as optical signals from a control station apparatus and transmits the transmission signals as electric signals, comprising: an optoelectronic conversion section that converts the transmission signals from optical signals into intermediate frequency electric signals; a filter section that attenuates unnecessary waves inclusive of other carriers of own apparatus; a radio frequency conversion section that converts the frequency of the transmission signals, from which signals other than desired signals are removed in the filter section, into radio frequencies which are frequencies higher than the intermediate frequency for each carrier; and an amplifying section that amplifies the transmission signals as radio frequency converted in accordance with a transmission power level outputted from said control station apparatus.

**2.** (Deleted)

**3.** The base station apparatus according to claim 1, further comprising a signal detecting section that determines whether or not the transmission signals are output from said filter section; and a signal blocking section that blocks the output of the transmission signals from said filter section.

**4.** The base station apparatus according to claim 1, further comprising a frequency separating section that separates the transmission signals converted into electric signals in predetermined frequency units, and wherein said filter section removes unnecessary waves inclusive of a carrier other than the carrier of own apparatus from a plurality of the transmission signals separated by said frequency separating section.

**5.** The base station apparatus according to claim 1, further comprising a wavelength separating section that separates the transmission signals which are received as optical signals in predetermined wavelength units, and wherein said optoelectronic conversion section converts a plurality of the transmission signals separated by said wavelength separating section from optical signals to electric signals respectively.

**6.** (Amended) A control station apparatus that transmits transmission signals to a base station apparatus as optical signals, and comprises an intermediate frequency conversion section that converts the frequency of said transmission signals to an intermediate frequency; an electrooptical conversion section that converts the transmission signals, converted into signals of said intermediate frequency, from electric signals to optical signals; and a transmission power level output section that outputs, to the base station apparatus, a transmission power level indicative of the electric power level of the transmission signals to be wireless transmitted from the base station.

**7.** The control station apparatus according to claim 6, further comprising a filter section that attenuates components falling outside a desired frequency band and wherein the electrooptical conversion section converts the transmission signals, from which signals other than desired signals are removed, from electric signals to optical signals.

**8.** (Deleted)

**9.** The control station apparatus according to claim 6, further comprising a frequency multiplexing section that multiplexes by frequency a plurality of transmission signals, wherein the intermediate frequency conversion section converts a plurality of transmission signals into signals of different intermediate frequencies, and wherein said frequency multiplexing section frequency multiplexes a plurality of transmission signals converted into intermediate frequency signals by said intermediate frequency conversion section.

**10.** The control station apparatus according to claim 6, further comprising a wavelength multiplexing section that multiplexes by wavelength a plurality of transmission signals converted into optical signals at the electro-optical conversion section.

**11.** The control station apparatus according to claim 9 wherein the intermediate frequency conversion section converts the plurality of transmission signals into intermediate frequency signals of different integer multiples of the reference frequency.

**12.** The control station apparatus according to claim 6 further comprising a phase control section that introduces a plurality of phase differences among the transmission signals; and a plurality of antennas that transmits said plurality of transmission signals respectively.

**13.** A base station apparatus that transmits received signals on a plurality of carriers as optical signals to a control station apparatus, comprising: an intermediate frequency conversion section that converts the frequencies of the received signals from radio frequencies to an intermediate frequency; a filter section that attenuates unnecessary waves inclusive of other carrier of own apparatus out of received signals converted into intermediate frequency; and an electrooptical conversion section that converts the received signal, from which signals other than desired signals are removed, from electric signals to optical signals.

**14.** The base station apparatus according to claim 13, further comprising a frequency multiplexing section that multiplexes by frequency a plurality of the received signals converted into the intermediate frequency at the intermediate frequency conversion section.

**15.** The base station apparatus according to claim 13, further comprising a wavelength multiplexing section that multiplexes by wavelength a plurality of received signals converted into optical signals at the electrooptical conversion section.

**16.** The base station apparatus according to claim 15, wherein the intermediate frequency conversion section converts the plurality of received signals into intermediate frequency signals of integer multiples of the reference frequency different from each other.

**17.** A control station apparatus that receives received signals as transmitted from a base station apparatus as optical signals, comprising: an optoelectronic conversion section that converts the optical signals into electric signals; a baseband conversion section that frequency converts said intermediate frequency signals into baseband signals, wherein said base station apparatus comprises: an intermediate frequency conversion section that converts the frequencies of the received signals on a plurality of carriers from the radio frequencies to an intermediate frequency; a filter section that attenuates unnecessary waves inclusive of a carrier other than the carrier of own apparatus from the received signals as converted into the intermediate frequency; and an electrooptical conversion section that converts the reception signals, whose unnecessary waves are attenuated, from electric signals to optical signals.

**18.** The control station apparatus according to claim 17, further comprising a filter section that attenuates components falling outside a desired frequency band from said intermediate frequency signals and wherein the baseband conversion section converts the intermediate frequency signals, from which signals other than desired signals are removed, to optical signals.

**19.** The control station apparatus according to claim 17, further comprising a frequency separating section that separates the received signals as converted by the optoelectronic conversion section into electric signals in predetermined frequency units, and wherein said filter section removes signals other than desired signals from a plurality of the received signals as separated by said frequency separating section.

**20.** The control station apparatus according to claim 17, further comprising a wavelength separating section that separates the received signals, which are received as optical signals, in predetermined wavelength units, and wherein the optoelectronic conversion section converts a plurality of the received signals as separated by said wavelength separating section from optical signals to electric signals.

**21.** (Amended) An optical transmission method of converting the frequency of transmission signals to an intermediate frequency, converting the transmission signals as converted into said intermediate frequency signals from electric signals to optical signals, outputting the optical signals to a base station apparatus, and outputting, to the base station apparatus, a transmission power level indicative of the electric power level of the transmission signals to be wireless transmitted from the base station, in a control station apparatus; and converting the transmission signals as output from a control station apparatus from optical signals to electric signals, converting the transmission signals into radio frequency after attenuating unnecessary waves inclusive of a carrier other than the carrier of own apparatus which are contained in the transmission signals as converted into the electric signals, and amplifying the transmission signals, as converted into radio frequency signals, in accordance with the transmission power levels output from said control station apparatus in the base station apparatus.

**22.** (Amended) An optical transmission method of converting the frequency of received signals from radio frequencies to intermediate frequency, converting the received signals converted into said intermediate frequency from electric signals to optical signals, and outputting the optical signals to a control station apparatus in a base station apparatus; and converting the received signals outputted from a base station apparatus from optical signals to electric signals, and converting the received signals into baseband signals after attenuating unnecessary waves inclusive of other carriers of own apparatus which are contained in the received signals converted into the electric signals.
